# EUROPEAN PATENT APPLICATION

(11) **EP 2 607 693 A1**
(43) Date of publication of application: **26.06.2013**
(21) Application number: 11195337.8
(22) Date of filing: 22.12.2011
(51) Int. Cl.: F03D 11/00, F03D 1/00

(54) **Method and system for determining a mechanical load**

(71) Applicant: Siemens Aktiengesellschaft, 80333 München (DE)
(72) Inventor: Thiele, Uwe, 52372 Kreuzau (DE); Hohle, Andreas Christian, 52477 Alsdorf (DE); Nguyen, Cong, 52074 Aachen (DE); Schneider, Peter, 52379 Langerwehe (DE)

(57) **Abstract**

It is described an arrangement and a method for determining a mechanical load of a component, in particular a nacelle (101), of a wind turbine, the method comprising: measuring first data (131) indicative of an acceleration of the component (101) at a first position (127) of the component (101); measuring second data (139) indicative of an acceleration of the component (101) at a second position (129) of the component, the second position being different from the first position; computing the mechanical load (145) based on the first data and the second data.

## Description

### Field of invention

The present invention relates to a method and to an arrangement for determining a mechanical load of a component, in particular a nacelle of a wind turbine, wherein the method may in particular be performed during handling, in particular transporting, the component of the wind turbine.

### Art Background

Components of a wind turbine need to be transported from a manufacturing site to an installation site at which they are erected in order to generate electric energy from wind energy. During the transport of these wind turbine components or assemblies it may happen that the components of the wind turbine are exposed to shock loads which may be above an acceptance level. Such shock loads may create hit marks or cracks for example on bearings and gears. Further, the stability of the components may be impaired due to damage during transport. Thereby, the life time of these components may be decreased. Further, twisting or bending during transport of the assemblies or components may occur which may also decrease the life time of the component or assembly.

Conventionally an impact indicator may detect, if an impact above a certain level occurs. Those kind of impact indicators are sold by the company ShockWatch, Dallas, Texas. The ShockWatch sensors monitor and report in realtime the shock, vibration and environmental conditions experienced by structures, facilities and equipment during transit, storage and operation. Thereby, the direction, amplitude and duration of the impact force is recorded. In particular, the ShockWatch sensors may be used for monitoring wind turbines.

It has been observed that conventional methods for determining a mechanical load during transport of wind turbine components are not satisfactory.

There may be a need for a method and an arrangement for determining a mechanical load of a component, in particular a nacelle of a wind turbine, wherein the mechanical load is more accurately determined, in order to more accurately estimate how far (to which degree) the monitored component is impaired or deteriorated.

### Summary of the Invention

According to an embodiment of the present invention it is provided a method for determining a mechanical load of a component, in particular a nacelle, of a wind turbine, the method comprising measuring first data indicative of an acceleration of the component at a first position of the component; measuring second data indicative of an acceleration of the component at a second position of the component, the second position being different from the first position; and computing the mechanical load based on the first data and the second data.

The mechanical load of the component may comprise a stress experienced by the component, a strain experienced by the component, a deformation experienced by the component, a bending of the component, a (partial) disruption or rupture of the component, material deterioration of the component.

The component may be for example a portion of a wind turbine tower, such as a wall portion of the wind turbine tower, a entire wind turbine tower, a rotor blade of the wind turbine, and in particular a nacelle of the wind turbine. When the wind turbine is assembled the nacelle may be mounted on top of the wind turbine tower. The nacelle may comprise a generator for generating electric energy upon rotation of a rotation shaft which may be rotatably supported within the nacelle. At one end the rotation shaft may have one or more rotor blades connected which may be directed towards the wind such that the impacting wind transfers a driving action onto the rotor blade in order to rotate the rotation shaft. The nacelle may be rotatably relative to the wind turbine tower, wherein a rotation (yawing) around a vertical axis may be possible for orienting the nacelle (and thus the rotor blades) towards the wind. The nacelle may comprise a gear box which transforms the rotational speed of the main rotation shaft to a higher rotation speed of the high speed rotation shaft.

The acceleration of the component at the first position of the component may be characterized by a magnitude of the acceleration and a direction of the acceleration. Further, the acceleration of the component at the second position of the component may be characterized by a magnitude of the acceleration and a direction of the acceleration. For measuring the first data and also for measuring the second data an acceleration sensor, such as a ShockWatch sensor, may be utilized.

The first data as well as the second data may comprise a portion from which the acceleration is derivable and may further comprise one or more portions which for example identify the component, are indicative of a time and a day of the measurement and comprise information about measurement conditions, such as temperature, humidity, or other environmental conditions. In particular, the accelerations at the two different positions may be continuously acquired, such as by sampling at consecutive time points. The first data as well as the second data may be stored in an appropriate electronic data storage. In particular, the first data and the second data may comprise electrical and/or optical signals. The first data and the second data may be supplied to a common analysis system or a corresponding arrangement for determining the mechanical load.

The first data and the second data may comprise information about a geometry, a material used for manufacturing, and a configuration, in particular mechanical configuration of the component which is monitored for determining the mechanical load. Alternatively, data regarding the configuration of the component, the geometry of the component and/or the material used to manufacture the component may be stored in a database or storage and may only be accessible by the arrangement for determining the mechanical load. The arrangement may in particular comprise a computing facility which may be adapted to read-in the first data and the second data and perform various calculations based on the first data and the second data, in particular also taking into account the configuration related data (possibly stored in a data base and/or comprised in the first data and second data) characterizing the configuration (geometry, material) of the component.

The computing may comprise using a mechanical model of the component (which may include information regarding the geometry and the materials used for manufacturing the component). The model may take into account the mechanical properties of the component and make use of physical laws or physical equations relating forces applied to different positions of the component to effects regarding the mechanical load. In particular, the laws of static and dynamic mechanics may be applied during the computing the mechanical load.

By taking into account measured accelerations of the component at two different positions the mechanical load may be determined in a more accurate manner. For example, if the acceleration at the first position equals (in magnitude as well as in direction) to the acceleration at the second position, it may be determined that there is no bending or no twisting of the component. On the other hand, if the acceleration at the first position differs (in particular in magnitude and in direction) from the acceleration at the second position it may be determined that the component experienced a twist or a bending action having particular consequences for the stability of the component, thus for the mechanical load experienced by the component.

According to an embodiment of the present invention the mechanical load is further computed based on the first position and the second position. In particular, the first position may be spaced apart from the second position by between 2 m and 10 m, for example. In particular, the mechanical load computed based on the first data and the second data may give in particular information regarding the mechanical load of components arranged between the first position and the second position.

In particular, the first data may comprise information indicative of the first position (e.g. three coordinates) and the second data may comprise information indicative of the second position (e.g. three other coordinates).

According to an embodiment of the present invention the mechanical load is computed based on a difference between the first position and the second position. In particular, the mechanical load may depend on a difference between the first position and the second position.

According to an embodiment of the present invention the acceleration at the first position and/or the second position each comprises three acceleration components, in particular relating to accelerations in three different direction being mutually perpendicular to each other.

In particular, the acceleration may be measured in the x-direction, the y-direction and the z-direction of a rectangular Cartesian coordinate system. Thereby, conventionally available accelerometers may be used, such as a ShockWatch sensor.

According to an embodiment of the present invention the method is performed during transport and/or handling and/or loading of the component. In particular, during these events mechanical loads may be experienced by the component which may deteriorate the component or decrease the life time of the component. For scheduling maintaining the component (such as by repairing or exchanging parts of the component) it may be necessary to accurately know the experienced mechanical load.

According to an embodiment of the present invention the measuring is performed using at least two internal accelerometers being used during normal operation of the wind turbine after transport, wherein the internal accelerometers are in particular used during normal operation for monitoring the mechanical behaviour of torque transmitting components of the wind turbine.

The gear system may for example be a gear between the main rotation shaft (at which the rotor blades are connected) and a secondary shaft which may rotate with a higher frequency than the main shaft. The secondary shaft may be rotating within the generator for generating electric energy. The gear may in particular be sensitive to accelerations or shocks or impact forces. During normal operation the component (as a whole) may not be subjected to excessive shocks or accelerations. By using the at least two internal accelerometers additional accelerometers for measuring the first data and the second data can be dispensed with. Thereby, the method may be simplified and the arrangement may be simplified as well, thereby reducing the costs.

According to an embodiment of the present invention, for powering the accelerometers, an internal energy supply of the component is used. For example, the nacelle of the wind turbine may have conventionally its own energy supply. Thereby, no additional energy supply for driving the accelerometer is necessary.

According to an embodiment of the present invention the computing the mechanical load comprises determining a degree of bending and/or twisting and/or mechanical stress of the component based on the first data and the second data.

In particular, the laws of statics and dynamic of mechanic and/or material science may be applied during the computing the mechanical load. Bending and/or twisting and/or mechanical stress may result in cracks or material fatigue which may affect the stability of the component. Thereby, estimating the degree of bending and/or twisting and/or mechanical stress may allow to estimate the remaining life time of the component.

According to an embodiment of the present invention position and direction of a force associated with the accelerations (i.e. at the first position and the second position) is monitored for computing the mechanical load. In particular, a first force may be associated with the acceleration at the first position and a second force may be associated with the acceleration at the second position. In particular, the first force and also the second force may be characterized regarding its magnitude and direction and may further be characterized by the position they are acting at. Further, a relative force (in particular a difference between the first force and the second force) may be computed based on which the mechanical load may be computed. For example, if the relative force is zero it may be determined that there is no bending and no twisting and no compressing and no expanding of the component. In contrast, when the relative force is not zero than a bending, a twisting and/or a deformation or compressing or expanding of the component may have occurred or small cracks may have been generated within or at the component.

According to an embodiment of the present invention the measuring comprises recording a time course of the two accelerations, wherein the computing the mechanical load comprises computing a time course of the mechanical load based on the time course of the two accelerations.

The time course of the mechanical load may reflect a history of impact events or acceleration events at the two positions. In particular, the mechanical load may depend on a magnitude and a duration during which a momentary mechanical load occurred.

According to an embodiment of the present invention the method for determining the mechanical load further comprises computing an accumulated load by accumulating the time course of the mechanical load. The accumulated load may be determined by summing momentary mechanical loads which may be weighted by the respective time interval they occurred or may be weighted by their magnitude.

The computing the accumulated load may also depend on the material and construction and geometry of the component.

According to an embodiment of the present invention the method further comprises indicating a warning, if the determined mechanical load exceeds a threshold. The warning may for example indicate that the considered component can not be used anymore for assembling a wind turbine.

According to an embodiment of the present invention it is provided a method of handling (for example transporting) a component, the method comprising transporting the component on a vehicle (such as a truck or a train); determining the mechanical load according to one of the above described embodiments; transmitting load data indicative of the mechanical load to the vehicle, in particular to a driver of the vehicle; and adapting, in particular by the driver, a driving characteristics of the vehicle based on the load data.

Thereby, in particular during transporting, an excess deterioration of the component may be avoided. In particular, the driving characteristics of the vehicle may be adapted such that the mechanical load of the component may be kept below a particular threshold until the end of the transportation.

According to an embodiment of the present invention the adapting the driving characteristics comprises lowering the acceleration of the vehicle when the load data indicates that the mechanical load is above a load threshold. For example, the speed of the vehicle may be decreased or the speed in curves may be decreased. Further, the speed when driving over bumpy roads may be decreased. Further, the component may be fastened to the vehicle with damping material between the component and the vehicle.

It should be understood that features individually or in any combination disclosed, described or provided for a method for determining a mechanical load of a component may also be applied (individually or in any combination) to an arrangement for determining a mechanical load of a component according to an embodiment of the present invention and vice versa.

According to an embodiment of the present invention it is provided an arrangement for determining a mechanical load of a component, in particular a nacelle, of a wind turbine, the arrangement comprising an input terminal for receiving first data indicative of an acceleration of the component at a first position of the component and for receiving second data indicative of an acceleration of the component at a second position of the component, the second position being different from the first position; and a processor for computing the mechanical load based on the first data and the second data.

The arrangement may further comprise a first accelerometer for measuring the first data and a second accelerometer for measuring the second data.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

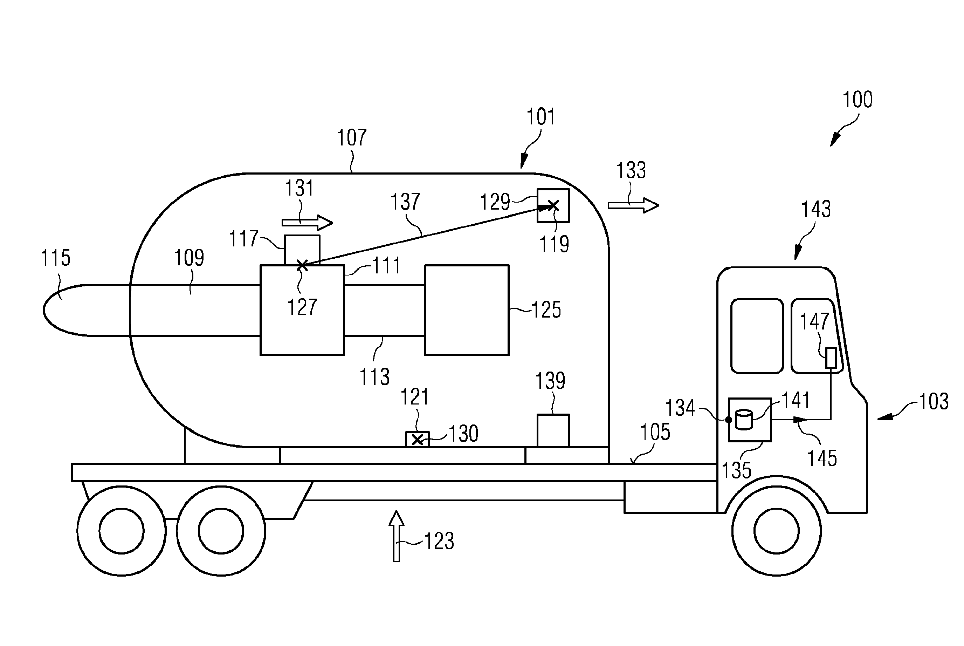

The figure schematically illustrates a nacelle of a wind turbine for which the mechanical load may be determined during transportation according to an embodiment of the present invention.

### Detailed Description

The figure schematically illustrates a transport 100 of a nacelle 101 during which a method for determining a mechanical load of the nacelle may be performed.

The nacelle 101 is fastened by not illustrated fasteners to a truck 103 having a load area 105 on which the nacelle 101 is arranged and fastened. The nacelle 101 comprises a casing 107 a main rotation shaft 109 which is rotatably supported within the casing 107 by not illustrated bearings. Further, the nacelle 101 comprises a gear box 111 to which the main rotation shaft 109 and a high speed rotation shaft 113 are mechanically connected. The gear box 111 transforms the rotational speed of the main rotation shaft 109 to a higher rotation speed of the high speed rotation shaft 113. Thereby, the gear box 111 is relatively sensible or sensitive to accelerations or shocks which may occur during normal operation of the wind turbine during which the main rotation shaft 109 is driven by not illustrated rotor blades which are connected to a hub 115 of the nacelle 101.

For monitoring the shocks or accelerations the nacelle 101 further comprises a first accelerometer 117 which is fixed at or close to the gear box 111 in order to detect accelerations of the gear box 111. Further, the nacelle 101 comprises a second accelerometer 119 which is fixed at the casing 107 of the nacelle 101. Further, the nacelle 101 comprises a third accelerometer 121 which is fixed to the casing 107 of the nacelle 101 close to a position where the nacelle 101 is installed on top of a wind turbine tower. Close to the third accelerometer 121 a (not illustrated) yawing mechanism is arranged in the assembled wind turbine for turning the nacelle 101 around a vertical direction 123 during normal operation of the wind turbine for generating electric energy.

The secondary shaft 113 is mechanically connected to an electric generator 125 which generates electric energy upon rotation of the high speed rotation shaft 113 due to the rotation of the main shaft 109.

During transporting the nacelle 101 on the load area 105 of the truck 103 the first accelerometer 117 and the second accelerometer 119 measure the accelerations at the first position 127 and the second position 129, respectively, and transmit first data 131 and second data 133, respectively to an arrangement 135 for determining a mechanical load according to an embodiment of the present invention.

The transmission of the first data 131 and the second data 133 can be performed using the Bluetooth technology, i.e. wirelessly. The first data 131 comprise data regarding the magnitude and the direction of the acceleration and the first position 127. The second data 133 comprise information regarding the magnitude and direction of the acceleration at the second position 129.

The arrangement 135 computes the mechanical load based on the first data 131 and based on the second data 133. In particular, a difference vector 137 between the first position 127 and the second position 129 is taken into account by the arrangement 135 for computing the mechanical load of the nacelle 101. Further third data of the third accelerometer 121 may be transmitted to the arrangement 135 which may also take into account the third data for computing the mechanical load.

For powering the accelerometers 117, 119 and 121 the power supply 139 of the wind turbine 101 is used.

The arrangement 135 comprises a database or electronic storage 141 for storing a time course of the accelerations comprised in the first data 131 and the second data 133. In the database 141 also information regarding to the construction of the nacelle 101, in particular regarding the used material and geometry, is stored which may be considered or taken into account when computing the mechanical load of the nacelle due to the different accelerations the nacelle 101 is subjected to during the transport by the track 103.

The arrangement 135 has an input 134 (in particular comprising an antenna) for receiving the first data 131 indicative of an acceleration of the component at a first position 127 of the component 101 and for receiving the second data 133 indicative of an acceleration of the component 101 at a second position 129 of the component 101.

The arrangement 135 may either by arranged within or at the nacelle 101 or may be arranged in the drivers cab 143 as illustrated in the figure. The arrangement 135 is adapted to transmit load data 145 which are indicative of the mechanical load of the nacelle 101 (as derived by the arrangement 135) to a display 147 which is in the view of a not illustrated driver of the truck 103. The display 147 displays a representation of the load data 145 to the driver. The driver perceives the representation of the load data 145 and adapts the driving characteristics of the truck 103 based on the perceived load data. In particular, the driver may lower the speed of the truck 103 or lower the speed of the truck 103 in particular in curves.

Accelerometers or vibration sensor or impact indicators may be mounted on components of a wind turbine in order to determine a mechanical load of these components. In particular, the sensors or detectors may be fixed at known positions and also the directions for the force detections or acceleration detections are known. Thus, the relative positions of the sensors and the force directions are established or known and it is possible to determine by the arrangement 135 if too high bending moments or torques were applied to the components of the wind turbine, in particular the nacelle 101 illustrated in the figure.

Thereby, it may be monitored or checked, whether the components monitored by the method according to an embodiment of the present invention are still in a usable condition for assembling a wind turbine.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for determining a mechanical load of a component, in particular a nacelle (101), of a wind turbine, the method comprising:
measuring first data (131) indicative of an acceleration of the component (101) at a first position (127) of the component (101);
measuring second data (139) indicative of an acceleration of the component (101) at a second position (129) of the component, the second position being different from the first position;
computing the mechanical load (145) based on the first data and the second data.

2. Method according to claim 1, wherein the mechanical load is further computed based on first position (127) and second position (129).

3. Method according to claim 2, wherein the mechanical load is computed based on a difference (137) between the first position and the second position.

4. Method according to one of the preceding claims, wherein the acceleration at the first position and/or the second position each comprises three acceleration components (x,y,z), in particular relating to accelerations in three different direction being mutually perpendicular to each other.

5. Method according to one of the preceding claims which is performed during transport (100) and/or handling and/or loading of the component.

6. Method according to one of the preceding claims, wherein the measuring is performed using at least two internal accelerometers (117, 119, 121) being used during normal operation of the wind turbine after transport, wherein at least one of the internal accelerometers is in particular used during normal operation for monitoring load of a gear (111) of the wind turbine.

7. Method according to one of claim 6, wherein for powering the accelerometers an internal energy supply (139) of the component is used.

8. Method according to one of the preceding claims, wherein the computing the mechanical load comprises determining a degree of bending and/or twisting and/or mechanical stress of the component based on the first data and the second data.

9. Method according to one of the preceding claims, wherein position and direction of a force associated with the accelerations is monitored for computing the mechanical load.

10. Method according to one of the preceding claims, wherein the measuring comprises recording a time course of the two accelerations,
wherein the computing the mechanical load comprises computing a time course of the mechanical load based on the time course of the two accelerations.

11. Method according to one of the preceding claims, further comprising computing an accumulated load by accumulating the time course of the mechanical load.

12. Method according to one of the preceding claims, further comprising indicating (147) a warning, if the determined mechanical load exceeds a threshold.

13. Method of handling a component, the method comprising:
transporting (100) the component (101) on a vehicle (103);
determining a mechanical load according to one of the preceding claims;
transmitting, wirelessly or hard wired, load data (145) indicative of the mechanical load to the vehicle, in particular to a driver of the vehicle; and
adapting, in particular by the driver, a driving characteristics of the vehicle based on the load data.

14. Method according to claim 13,
wherein adapting the driving characteristics comprises lowering the acceleration of the vehicle when the load data indicate that the mechanical load is above a load threshold.

15. Arrangement (135) for determining a mechanical load of a component, in particular a nacelle, of a wind turbine, the arrangement comprising:
an input (134)
for receiving first data (131) indicative of an acceleration of the component at a first position (127) of the component (101);
and for receiving second data (133) indicative of an acceleration of the component (101) at a second position (129) of the component (101), the second position being different from the first position; and
a processor for computing the mechanical load based on the first data and the second data.
